(19) 

Europäisches
Patentamt

European
Patent Office

Office européen
des brevets

(11) **EP 3 869 758 B1**

(12) **EUROPEAN PATENT SPECIFICATION**

(45) Date of publication and mention
of the grant of the patent:
**22.10.2025 Bulletin 2025/43**

(21) Application number: **19874523.4**

(22) Date of filing: **23.09.2019**

(51) International Patent Classification (IPC):
*H04L 27/20* (2006.01)     *H04B 10/532* (2013.01)
*H04B 10/556* (2013.01)     *H04B 10/70* (2013.01)
*H04L 9/08* (2006.01)     *H04L 27/00* (2006.01)

(52) Cooperative Patent Classification (CPC):
**H04L 27/0014; H04B 10/532; H04B 10/5561;
H04B 10/70; H04L 9/0858; H04L 27/20**

(86) International application number:
**PCT/CN2019/107210**

(87) International publication number:
**WO 2020/078169 (23.04.2020 Gazette 2020/17)**

(54) **PHASE MODULATION-BASED QKD POLARIZATION STATE PREPARATION APPARATUS AND METHOD**

VORRICHTUNG UND VERFAHREN ZUR VORBEREITUNG EINES
PHASENMODULATIONSBASIERTEN QKD-POLARISATIONSZUSTANDES

APPAREIL ET PROCÉDÉ DE PRÉPARATION D'ÉTAT DE POLARISATION QKD REPOSANT SUR
UNE MODULATION DE PHASE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.10.2018  CN 201811209350**

(43) Date of publication of application:
**25.08.2021  Bulletin 2021/34**

(73) Proprietor: **Quantumctek Co., Ltd.
Hefei, Anhui 230088 (CN)**

(72) Inventors:
• **TANG, Yanlin
Hefei, Anhui 230088 (CN)**
• **XU, Mulan
Hefei, Anhui 230088 (CN)**
• **LI, Dongdong
Hefei, Anhui 230088 (CN)**

(74) Representative: **Piticco, Lorena
Isler & Pedrazzini AG
Giesshübelstrasse 45
Postfach 1772
8027 Zürich (CH)**

(56) References cited:
WO-A1-2018/042203     CN-A- 101 692 137
CN-A- 106 656 491     CN-A- 107 255 440
CN-A- 108 494 494     CN-U- 208 768 104
CN-Y- 2 929 440     US-A1- 2003 067 667
US-B2- 8 433 070

• **XAVIER G B ET AL: "Stable single-photon
interference in a 1 km fiber-optical Mach-Zehnder
interferometer with continuous phase
adjustment", ARXIV.ORG, CORNELL
UNIVERSITY LIBRARY, 201 OLIN LIBRARY
CORNELL UNIVERSITY ITHACA, NY 14853, 14
April 2011 (2011-04-14), XP080549775, DOI:
10.1364/OL.36.001764**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

The present application claims priority to Chinese Patent Application No. 201811209350.3, titled "DEVICE AND METHOD FOR PREPARING QKD POLARIZATION STATE BASED ON PHASE MODULATION", filed on October 17, 2018 with the China National Intellectual Property Agency.

## FIELD

The present disclosure relates to the technical field of communications, and in particular to a device and a method for preparing a QKD polarization state based on phase modulation.

## BACKGROUND

Quantum key distribution (QKD) differs fundamentally from a classical key system in that a single photon or an entangled photon pair serves as a carrier of a key. A basic principle of quantum mechanics ensures that the QKD is free of eavesdropping and decipherment, and therefore a more secure key system is provided.

A fundamental principle of preparing a polarization state based on phase modulation is as follows.

$$\left|Out\right\rangle = \left|H\right\rangle + \left|V\right\rangle e^{i\Delta\varphi} \qquad (1)$$

An optical pulse is divided into two components $|H\rangle$ and $|V\rangle$ with perpendicular polarization directions, and a phase difference $\Delta\varphi$ between the two components is adjusted. A specific $\Delta\varphi$ would lead to a specific polarization state. For example, polarization states P, R, N, and L are obtained when the $\Delta\varphi$ is equal to 0, $\pi/2$, $\pi$, and $3\pi/2$, respectively. P is a 45° linear polarization state, N is a 135° linear polarization state, R is a right circular polarization state, and L is a left circular polarization state. P and N are orthogonal polarization states, and R and L are orthogonal polarization states. Both pairs of such orthogonal polarization states meet a requirement of the BB84 protocol for quantum communication.

Generally, a normal light path is subject to phase drifts due to factors such as ambient temperature and vibrations. In order to address such problem, a first scheme of phase self-stabilization based on a Sagnac loop is provided in conventional technology. In the first scheme, a frequency of a QKD system is subject to an upper limit (around 1GHz), and thus cannot be further increased.

A second scheme in conventional technology adopts a Mach-Zehnder interferometer when preparing polarization states based on phase modulation. In the second scheme, the frequency of the QKD system can be greatly increased, and there is no means of phase stabilization. Hence, the problem of phase drifts still exists.

A third scheme in conventional technology also adopts a Mach-Zehnder interferometer when preparing polarization states based on phase modulation. Further, a voltage of a phase modulator is tuned at a receiving (Bob) terminal to compensate for polarization distortion. The third scheme is deficient in a slow response, complex compensation, and the like. In addition, not performing calibration at a transmitting (Alice) terminal results in potential safety hazards.

In the conventional technology, no phase compensation scheme provides a fast response and a simple manner of compensation, to address the issue of phase deviation and phase drifts when preparing QKD polarization states via a Mach-Zehnder interferometer. Patent document with publication No. WO 2018042203 A1 discloses an interferometer device for providing path-to-polarization encoding without feedback compensation. Patent document with publication No. CN 108494494 A discloses a single-photon phase-lock device which implements phase compensation at the Bob terminal.

## SUMMARY

In view of the above, a device and a method for preparing a QKD polarization state based on phase modulation are provided according to embodiments of the present disclosure, to address an issue of phase deviation and phase drifts in preparation of QKD polarization states in conventional technology.

In order to achieve the above object, following technical solutions are provided according to embodiments of the present disclosure.

A device for preparing a QKD polarization state based on phase modulation is provided, including:

a light source module, configured to generate signal light; and

an equal-arm interferometer, including a first arm, a second arm, a phase modulator disposed in the first arm or the second arm, and a phase shifter disposed in the first arm or the second arm;

wherein the equal-arm interferometer is configured to receive the signal light and output the QKD polarization state;

wherein the device further includes:

a photoelectric detection module, configured to detect interference of the equal-arm interferometer and output an interference signal; and

a phase adjustment module, configured to adjust, based on the interference signal, a phase in the equal-arm interferometer to modulate the QKD polarization state.

A method for preparing a QKD polarization state based on phase modulation is further provided. The method is applied to the foregoing device. The method includes:

receiving adjustment light, by the equal-arm interferometer including the first arm, the second arm, the phase modulator disposed in the first arm or the second arm, and the phase shifter disposed in the first arm or the second arm;

transmitting, by the equal-arm interferometer, the adjustment light to the photoelectric detection module;

receiving, by the photoelectric detection module, the adjustment light to obtain the interference signal; and

receiving the interference signal by the phase adjustment module, and adjusting, by the phase adjustment module, the phase in the equal-arm interferometer to prepare the QKD polarization state.

Based on the above technical solutions, the device and the method for preparing the QKD polarization state based on phase modulation are provided according to embodiments of the present disclosure. The device includes the equal-arm Mach-Zehnder interferometer. Thereby, an issue of an upper limit on a system frequency is addressed, and the device for preparing QKD polarization state based on phase modulation is advantageous in a high speed. The photoelectric detection module and the phase adjustment module are provided at an Alice terminal. The photoelectric detection module detects the interference signal of the equal-arm Mach-Zehnder interferometer, and transmits the interference signal to the phase adjustment module. The phase adjustment module adjusts the phase in the equal-arm Mach-Zehnder interferometer based on the interference signal, so as to prepare the QKD polarization state. The prepared QKD polarization state is compensated and fed back in real time, and thereby phase deviation and phase drifts is reduced or even eliminated during preparation of the QKD polarization state.

In embodiments of the present disclosure, feedback is performed at the transmitting (Alice) terminal via the photoelectric detection module and the phase adjustment module. Thus, rapid feedback and calibration can be performed locally (i.e. at the Alice terminal). Such calibration meets a requirement on safety of QKD, and the device is both simple and reliable.

## BRIEF DESCRIPTION OF THE DRAWINGS

For clearer illustration of technical solutions in embodiments of the present disclosure or in conventional technology, hereinafter introduced are drawings for describing embodiments of the present disclosure or conventional technology. It is apparent that the drawings described hereinafter merely show embodiments of the present disclosure, and those skilled in the art may obtain other drawings according to the provided drawings without any creative effort.

Figure 1 is a schematic structural diagram of an overall concept of a device for preparing a QKD polarization state based on phase modulation according to an embodiment of the present disclosure;

Figure 2 is a diagram of a principle of phase feedback in preparing a QKD polarization state based on phase modulation preparation according to an embodiment of the present disclosure;

Figure 3 is a diagram of a principle of phase calibration in preparing a QKD polarization state based on phase modulation preparation according to an embodiment of the present disclosure;

Figure 4 is a diagram of a principle of both phase feedback and phase calibration in preparing a QKD polarization state based on phase modulation preparation according to an embodiment of the present disclosure;

Figure 5 is a schematic diagram of a structure in which feedback light and signal light are inputted along a same direction into an equal-arm Mach-Zehnder interferometer according to an embodiment of the present disclosure;

Figure 6 is a flowchart of a method of phase feedback in preparing a QKD polarization state based on phase modulation according to an embodiment of the present disclosure;

Figure 7 is a schematic structural diagram of a photoelectric detection module according to an embodiment of the present disclosure;

Figure 8 is a schematic structural diagram of another photoelectric detection module according to an embodiment of the present disclosure;

Figure 9 is a schematic diagram of a structure in which feedback light and signal light are inputted along opposite directions into an equal-arm Mach-Zehnder interferometer according to an embodiment of the present disclosure;

Figure 10 is a schematic diagram of another structure in which feedback light and signal light are inputted along opposite directions into an equal-arm Mach-Zehnder interferometer according to an embodiment of the present disclosure;

Figure 11 is a schematic diagram of a photoelectric detection module for backward input according to an embodiment of the present disclosure;

Figure 12 is a schematic diagram of another photoelectric detection module for backward input according to an embodiment of the present disclosure;

Figure 13 is a schematic diagram of a device for preparing a polarization state, with time-division multiplexed feedback light and signal light, according to an embodiment of the present disclosure;

Figure 14 is a schematic diagram of time-division multiplexed signal light and feedback light;

Figure 15 is a schematic diagram of timing control for time-division multiplexed signal light and feedback light;

Figure 16 is a schematic diagram of a structure in which calibration light and signal light are inputted along a same direction into a Mach-Zehnder interferometer according to an embodiment of the present disclosure; and

Figure 17 is a flowchart of a method of phase calibration in preparing a QKD polarization state based on phase modulation according to an embodiment of the present disclosure.

## DETAILED DESCRIPTION OF EMBODIMENTS

As described in the background, no phase compensation scheme in conventional technology provides a fast response and a simple manner of compensation, to address the issue of phase deviation and phase drifts when preparing QKD polarization states via a Mach-Zehnder interferometer.

A cause of the above issue is as follows. A Sagnac loop of phase self-stabilization has an upper limit in frequency, and thereby a frequency thereof is low. A scheme of preparing a polarization state based on phase modulation via a Mach-Zehnder interferometer is not limited in a frequency of a system. Due to manufacturing techniques and an environment, there is a time-varying phase difference between two arms of the Mach-Zehnder interferometer. In conventional technology, there is no means of phase stabilization. Even if there is any, a voltage of a phase modulator at a receiving (Bob) terminal is tuned to compensate for polarization distortion, and no feedback is performed at a transmitting (Alice) terminal. Phase detection at the Bob terminal is achieved via a single-photon detector which has an upper limit of saturated counting. Thereby, the Alice terminal cannot transmit feedback light that is too strong. Hence, such scheme is deficient in a slow response, complex compensation, and the like.

Phase deviation in preparing a QKD polarization state based on phase modulation device is as follows. The Mach-Zehnder interferometer in usage is subject to influences from environment. In case of a change in ambient temperature, a nominal modulation voltage applied on a phase modulator becomes inaccurate, resulting in inaccuracy in four polarization states, namely, P, R, N and L. In such states, the phase modulator PM is required to modulate a phase of $0$, $\pi/2$, $\pi$, and $3\pi/2$, respectively. Deviation in a prepared polarization state is expected in case of deviation in the phase modulated by the phase modulator PM.

In view of the above, a device and a method for preparing a QKD polarization state based on phase modulation are provided according to embodiments of the present disclosure. The device includes an equal-arm Mach-Zehnder interferometer. Thereby, the upper limit on the system frequency is avoided, and the device achieves a high speed.

A photoelectric detection module and a phase adjustment module are provided at the Alice terminal. The photoelectric detection module detects an interference signal of the equal-arm Mach-Zehnder interferometer, and transmits the interference signal to the phase adjustment module. The phase adjustment module performs phase adjustment based on the interference signal, via a phase shifter that is disposed in an arm of the equal-arm Mach-Zehnder interferometer. Thereby, a phase difference between the two arms of the equal-arm Mach-Zehnder interferometer is equal to zero or an integer multiple of $2\pi$, and the equal-arm Mach-Zehnder interferometer is stabilized to prepare stable QKD polarization states at a high speed. Additionally or alternatively, the phase adjustment module tunes, based on the interference signal, a nominal modulation voltage of a phase modulator disposed in an arm of the equal-arm Mach-Zehnder interferometer. Thereby, a phase modulation voltage is calibrated to prepare accurate QKD polarization states.

A phase difference being is equivalent to that being an integer multiple of $2\pi$, between the two arms of the equal-arm Mach-Zehnder interferometer. Hence, embodiments of the present disclosure only take the zero phase difference as an example to illustrate the same effect, and such equivalence would not be repeatedly mentioned herein.

Hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

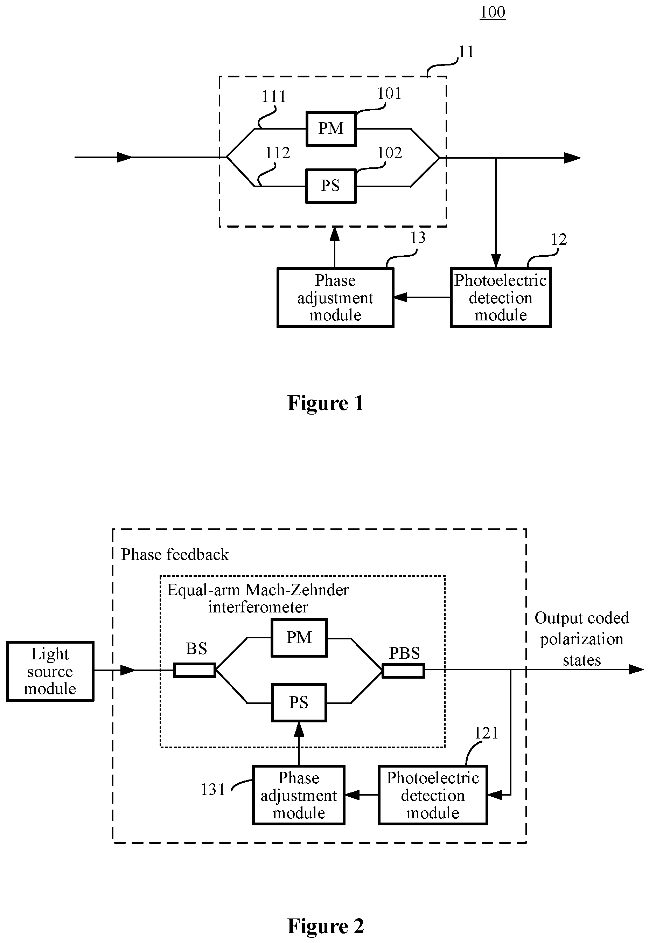

Reference is made to Figure 1, which is a schematic structural diagram of an overall concept of a device for preparing a QKD polarization state based on phase modulation according to an embodiment of the present disclosure. The device 100 for preparing a QKD polarization state based on phase modulation includes an equal-arm interferometer 11. The equal-arm interferometer 11 includes a first arm 111, a second arm 112, a phase modulator (PM) 101 that is disposed in the first arm 111 or the second arm 112 of the equal-arm interferometer 11, and a phase shifter (PS) 102 that is disposed in the first arm 111 or the second arm 112 of the equal-arm interferometer 11. The device 100 for preparing the QKD polarization state based on phase modulation further includes a photoelectric detection module 12 and a phase adjustment module 13. The photoelectric detection module 12 detects interference of the equal-arm interferometer 11 to obtain an interference signal, and transmits the interference signal to the phase adjustment module 13. The phase adjustment module 13 processes the interference signal to obtain a phase adjustment signal. The phase adjustment module 13 applies the phase adjustment signal on the phase shifter 102 and/or the phase modulator 101.

The equal-arm interferometer in embodiments of the present disclosure may be an equal-arm Mach-Zehnder interferometer or another type of an equal-arm interferometer, such as an equal-arm Michelson interferometer or an equal-arm interferometer in a form of integrated optical chip. Herein the equal-arm Mach-Zehnder interferometer is taken as an example for illustration in following embodiments, but a type of the equal-arm interferometer is not limited thereto.

In addition, herein it is taken as an example for illustration in the following embodiments that the phase modulator 101 is disposed in the first arm 111 and the phase shifter 102 is disposed in the second arm 112. A case in which the phase modulator 101 and the phase shifter 102 are disposed in a same arm is similar. The only difference is that the phase modulator and the phase shifter being in the same arm, and connections concerning the photoelectric detection module and the phase adjustment module is identical. Such similarity would not be repeated herein.

Reference is made to Figure 1 for a specific embodiment. A process of applying the phase adjustment signal on the phase shifter 102 and/or the phase modulator 101 is as follows.

Phase adjustment is performed on the phase shifter 102 disposed in the second arm of the equal-arm Mach-Zehnder interferometer. Thereby, a phase difference between the two arms of the equal-arm Mach-Zehnder interferometer is zero, and the equal-arm Mach-Zehnder interferometer is stabilized to prepare stable QKD polarization states at a high speed. Additionally or alternatively, a nominal modulation voltage of the phase modulator 101 disposed in the first arm of the equal-arm Mach-Zehnder interferometer is tuned based on the interference signal. Thereby, a phase modulation voltage is calibrated to prepare accurate QKD polarization states. An issue of phase deviation or phase shifts in the equal-arm Mach-Zehnder interferometer is addressed.

Different manners of the adjustment correspond to different connections concerning the photoelectric detection module and the phase adjustment module. The phase adjustment module may perform the phase adjustment on the phase shifter in the second arm of the equal-arm Mach-Zehnder interferometer, based on the interference signal, to provide the zero phase difference between the two arms of the equal-arm Mach-Zehnder interferometer. In such case, the phase adjustment module is a phase feedback module. Reference is made to Figure 2. An input terminal of the phase feedback module 131 is connected to a photoelectric detection module 121 and an output terminal of the phase feedback module 131 is connected to the phase shifter PS.

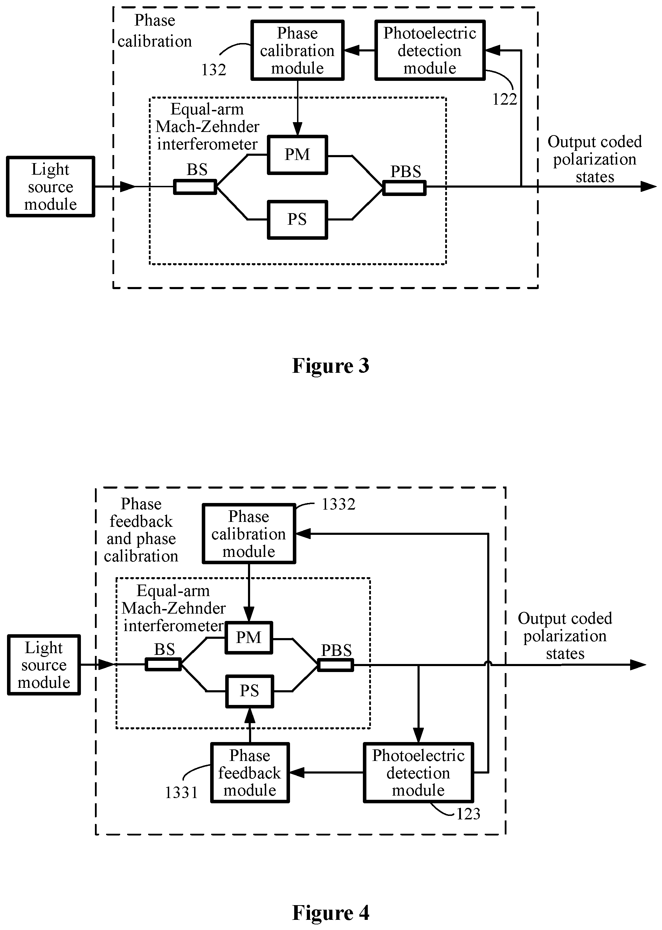

The phase adjustment module may tune the nominal modulation voltage of the phase modulator PM in the first arm of the equal-arm Mach-Zehnder interferometer, based on the interference signal, to obtain a calibrated phase modulation voltage. In such case, the phase adjustment module is a phase calibration module. Reference is made to Figure 3. An input terminal of the phase calibration module 132 is connected to a photoelectric detection module 122, and an output terminal of the phase calibration module 132 is connected to the phase modulator PM.

The phase adjustment module may apply the phase adjustment signal on the phase shifter and the phase modulator, to provide the zero phase difference in the equal-arm Mach-Zehnder interferometer and calibrate the applied phase modulation voltage. In such case, the phase adjustment module includes a phase feedback module 1331 and a phase calibration module 1332. Reference is made to Figure 4. An input terminal of the phase feedback module 1331 is connected to an output terminal of a photoelectric detection module 123. An output terminal of the phase feedback module 1331 is connected to the phase shifter PS. An input terminal of the phase calibration module 1332 is connected to an output terminal of the photoelectric detection module 123. An output terminal of the phase calibration module 1332 is connected to the phase modulator PM. That is, both the phase shifter PS and the phase modulator PM are adjusted, such that the QKD polarization states outputted by the equal-arm Mach-Zehnder interferometer are stable and accurate.

In embodiments of the present disclosure, the equal-arm Mach-Zehnder interferometer receives feedback light and performs photoelectric detection on the feedback light, so as to obtain a detection result and accordingly perform phase feedback. A manner of inputting the feedback light is not limited herein. In an optional embodiment, the feedback light and the signal light may be inputted along a same direction or opposite directions into the equal-arm Mach-Zehnder interferometer. Alternatively, the feedback light and the signal light may be time-division multiplexed. That is, the inputted light serves as the signal light in a period of time, and serves as the feedback light in another period of time, which is not limited herein.

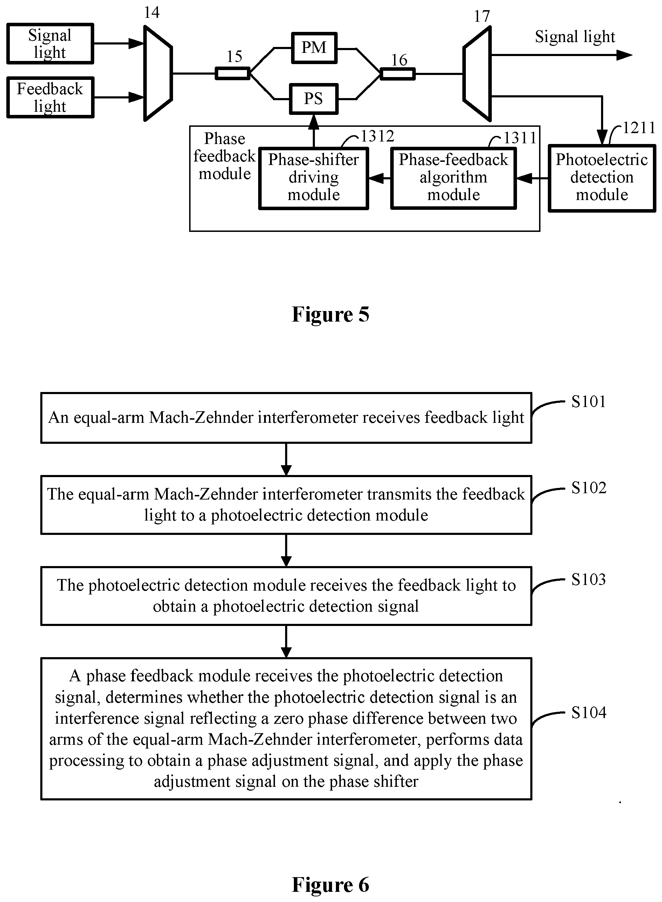

Figure 5 is a schematic diagram of a structure in which feedback light and signal light are inputted along a same direction into an equal-arm Mach-Zehnder interferometer according to an embodiment of the present disclosure. In this case, before inputting into the equal-arm Mach-Zehnder interferometer, the feedback light and the signal light need to be combined via a first wavelength division multiplexer 14, transmitted via a fiber, and then split into two beams via a beam splitter 15. When outputting from the equal-arm Mach-Zehnder interferometer, the split beams are combined via a polarization beam splitter 16, transmitted via a fiber, and then split via a second wavelength division multiplexer 17 into the signal light and the feedback light. The feedback light is inputted into the photoelectric detection module 1211 for detection, to obtain the interference signal. The interference signal is inputted into the phase-feedback algorithm module 1311 for data processing, to obtain a phase feedback signal. The phase feedback signal is inputted into the phase-shifter driving module 1312, to adjust the phase shifter PS. Thereby, the phase difference between the two arms of the equal-arm Mach-Zehnder interferometer turns zero, and phase stability is achieved.

On a basis of the above device, a phase feedback method for preparing a QKD polarization state based on phase modulation is further provided according to embodiments of the present disclosure. As shown in Figure 6, the method includes steps S101 to S104.

In step S101, an equal-arm Mach-Zehnder interferometer receives feedback light. The equal-arm Mach-Zehnder interferometer includes a first arm and a second arm. The first arm is provided with a phase modulator, and the second arm is provided with a phase shifter.

In step S102, the equal-arm Mach-Zehnder interferometer transmits the feedback light to a photoelectric detection module.

In step S103, the photoelectric detection module receives the feedback light to obtain a photoelectric detection signal.

In step S104, a phase feedback module receives the photoelectric detection signal, determines whether the photoelectric detection signal is an interference signal reflecting a zero phase difference between the two arms of the equal-arm Mach-Zehnder interferometer, then performs data processing to obtain a phase adjustment signal, and apply the phase adjustment signal on the phase shifter. Thereby, the zero phase difference between the two arms of the equal-arm Mach-Zehnder interferometer is provided for preparing the QKD polarization states at a high speed.

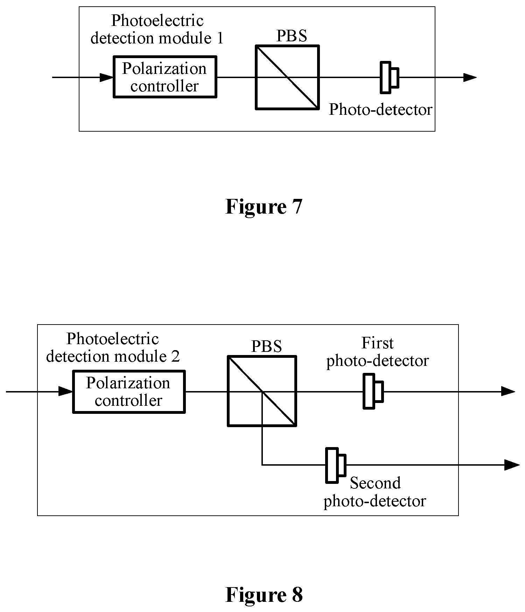

A structure of the photoelectric detection module is not limited herein, as long as a function of photoelectric detection can be implemented. An optional embodiment is as shown in Figure 7, which is a schematic structural diagram of a photoelectric detection module according to an embodiment of the present disclosure. The photoelectric detection module includes a polarization controller, a polarization beam splitter, and a photo-detector, which are sequentially arranged. The polarization controller receives the feedback light that is received and transmitted by the equal-arm Mach-Zehnder interferometer. The polarization beam splitter receives the feedback light and transmits the feedback light to the photo-detector. The photo-detector converts a light signal carried in the feedback light into an electrical signal. The electrical signal is an output of the photoelectric detection module, and serves as a basis for subsequent data processing.

Figure 8 is a schematic structural diagram of another photoelectric detection module according to an embodiment of the present disclosure. The photoelectric detection module includes a polarization controller, a polarization beam splitter, and a photo-detector 1, which are sequentially arranged. The photoelectric detection module further includes a photo-detector 2. The polarization controller receives the feedback light that is received and transmitted by the equal-arm Mach-Zehnder interferometer. The polarization beam splitter receives the feedback light, transmits the feedback light to the photo-detector 1, and reflects the feedback light to the photo-detector 2. The photo-detector 1 and the photo-detector 2 convert a light signal carried in the feedback light into electrical signals. The electrical signals are outputs of the photoelectric detection module, and serve as a basis for subsequent data processing.

In a case that the photoelectric detection module includes only one photo-detector, the corresponding interference signal reflecting the zero phase difference between the two arms of the interferometer is to a maximum count (or a minimum count) from the photo-detector.

In a case that the photoelectric detection module includes two photo-detectors, the corresponding interference signal reflecting the zero phase difference between the two arms of the interferometer is a maximum ratio (or a minimum ratio) between counts from the two photo-detectors.

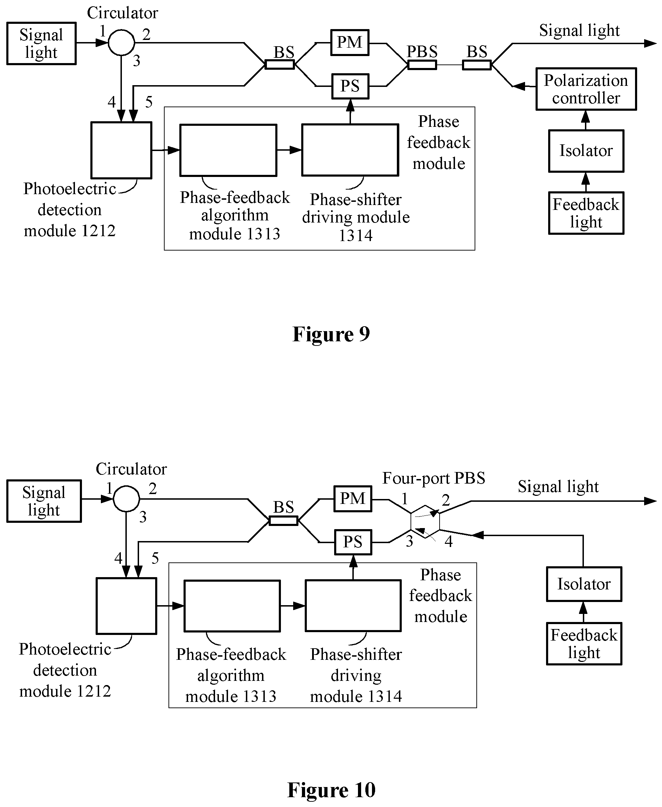

Figure 9 is a schematic diagram of a structure in which feedback light and signal light are inputted along opposite directions into an equal-arm Mach-Zehnder interferometer according to an embodiment of the present disclosure. In this case, before inputted into the equal-arm Mach-Zehnder interferometer, the feedback light may passes through an isolator, a polarization controller, and a beam splitter BS to combine with the signal light. Afterwards, the combined light enters the equal-arm Mach-Zehnder via a polarization beam splitter PBS, passes through the two arms of the equal-arm Mach-Zehnder interferometer, and then is split into two interference beams via a beam splitter BS. One of the two beams enters a port 2 of a circulator, and is outputted from a port 3 of the circulator to a port 4 of the photoelectric detection module 1212. Another of the two beams enters a port 5 of the photoelectric detection module 1212 directly. The photoelectric detection module 1212 receives the interference signal, and transmits the interference signal to a phase-feedback algorithm module 1313. The phase-feedback algorithm module 1313 performs data processing to obtain a phase feedback signal, and transmits the phase feedback signal to a phase-shifter driving module 1314 for adjusting the phase shifter. Thereby, the phase difference between the two arms of the equal-arm Mach-Zehnder interferometer turns zero, and phase stabilization is achieved.

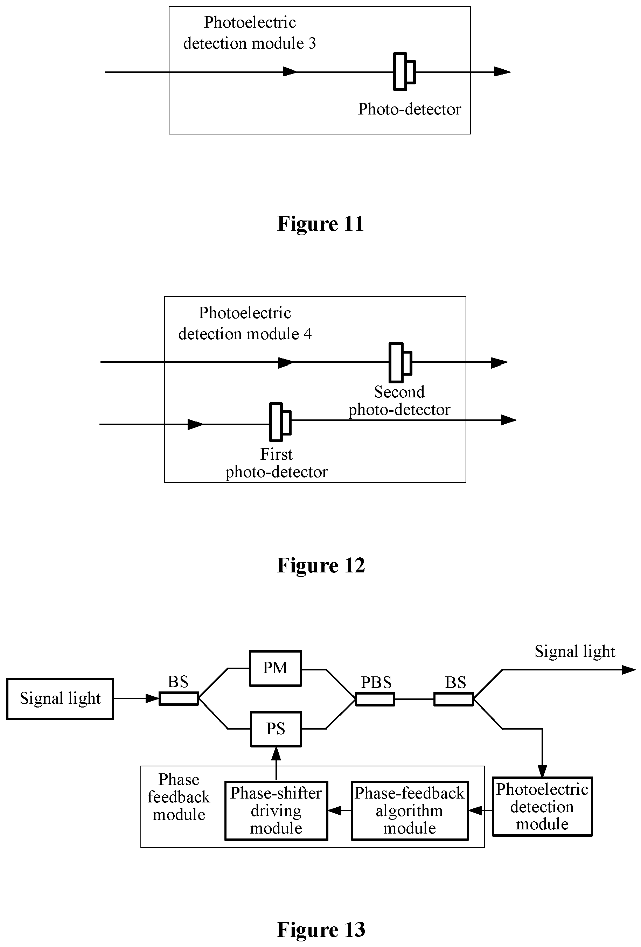

In addition, the feedback light may be inputted backward into the equal-arm Mach-Zehnder interferometer via a port of a PBS disposed at an output end of the equal-arm Mach-Zehnder interferometer. Reference is made to Figure 10, which is a schematic diagram of another structure in which feedback light and signal light are inputted along opposite directions into an equal-arm Mach-Zehnder interferometer according to an embodiment of the present disclosure. In this embodiment, the PBS disposed at the output end of the equal-arm Mach-Zehnder interferometer is a four-port PBS. As shown in Figure 11, the four-port PBS includes a port 1, a port 2, a port 3, and a port 4. A difference between polarizations of the input port 1 and the port 4 is 45°, and a difference between polarizations of the input port 3 and the port 4 is 45°. Namely, a half of light that is inputted inversely from the port 4 goes to the port 1, while the other half goes to the port 3. Such light is the feedback light inputted backward via the four-port PBS. The signal light inputted forward via the equal-arm Mach-Zehnder interferometer enters the port 1 and the port 3, and is outputted from the port 2.

A structure of the photoelectric detection module is not limited herein, as long as a function of photoelectric detection can be achieved. An optional embodiment of the present disclosure is as shown in Figure 11, which is a schematic diagram of a photoelectric detection module. The photoelectric detection module includes a photo-detector. The photo-detector receives only one of the two beams of the feedback light that are inputted into the port 4 and the port 5, respectively, as shown in Figure 9. The photo-detector converts a light signal carried in the feedback light into an electrical signal. The electrical signal is an output result of the photoelectric detection module, and serves as a basis for subsequent data processing.

Shown in Figure 12 is a schematic diagram of another photoelectric detection module according to an embodiment of the present disclosure. The photoelectric detection module includes a photo-detector 1 and a photo-detector 2. The photo-detector 1 and the photo-detector 2 receive beams of the feedback light that are inputted into the port 4 and the port 5, respectively, as shown in Figure 9. The photo-detectors convert a light signal carried in the feedback light into electrical signals. The electrical signals are output results of the photoelectric detection module, and serve as a basis for subsequent data processing.

In this embodiment, the phase feedback method is identical to that as shown in Figure 6, and is not repeated herein.

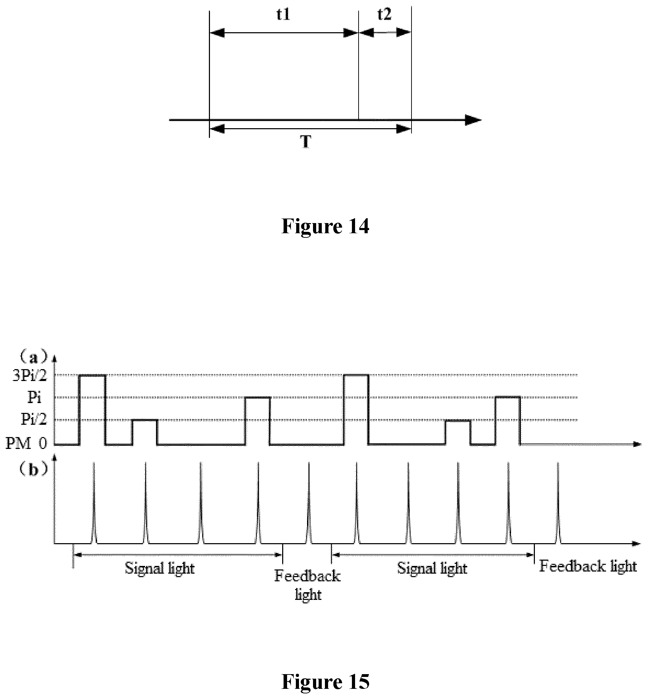

Another embodiment of the present disclosure is as shown in Figure 13, which is a schematic diagram of a structure with time-division multiplexed feedback light and signal light. The equal-arm Mach-Zehnder interferometer may receive a light signal under time-division multiplexing. The light signal is the signal light during a first period of time, and is the feedback light during a second period of time. As shown in Figure 14, in duration t1 of one period T, the light signal is the signal light for generating the polarization states normally. In duration t2 of such period T, a laser emits light for phase feedback. In this embodiment, the photoelectric detection module is identical to that of the case in which the feedback light and the signal light are inputted along the same direction, as shown in Figure 5.

Figure 15 (a) shows timing control of the phase modulator. Figure 15 (b) shows timing control of signal light and feedback light. A pulse for triggering a light source and a voltage pulse for triggering the phase modulator are same in frequency. Centers of the two pulses are aligned with each other. A width of voltage pulse for the phase modulator needs to be greater than that of the pulse for the light source. Heights of the voltage pulses depend on a random number generator. Therefore, phase shifts of 0, $\pi/2$, $\pi$, or $3\pi/2$ are randomly generated for preparing polarization states. In the duration t2 coming after the duration t1, posterior pulses generated by the light source serve as the feedback light. At such time, the phase modulation signal is disabled, and the phase feedback module is activated. The activated phase feedback module detects a phase difference between the two arms of the interferometer, and feeds the phase difference back to the phase shifter in real time, until a next period starts.

In this embodiment, the phase feedback method is identical to that of the same-direction-input case, as shown in Figure 6, and is not repeated herein.

In embodiments of the present disclosure, the photoelectric detection module and the phase adjustment module may be connected to the phase modulator disposed in the first arm of the equal-arm Mach-Zehnder interferometer, to tune a nominal modulation voltage of the phase modulator. A basis of such structure is as shown in Figure 3, which has been described in detail in the foregoing embodiments and is not repeated herein.

In these embodiments of the present disclosure, the equal-arm Mach-Zehnder interferometer receives calibration light, and performs photoelectric detection on the calibration light, to obtain a detection result for phase calibration. A manner of inputting the calibration light is not limited herein. In an optional embodiment, the calibration light and the signal light may be inputted along a same direction, or along opposite directions, into the equal-arm Mach-Zehnder interferometer. Alternatively, the calibration light and the signal light may be time-division multiplexed. That is, the inputted light serves as the signal light for a period of time, and serves as the calibration light for another period of time, which is not limited herein.

In these embodiments, connections concerning the photoelectric detection module and the phase calibration module for different input modes of the calibration light and the signal light are similar to those for different input modes, respectively, of the feedback light and the signal light in the phase-feedback cases. It is taken as an example to illustrate these embodiments that the calibration light and the signal light are inputted along the same direction. Cases of being inputted from opposite directions or being time-division multiplexed are identical to those corresponding phase-feedback cases, and are not described in detail in the embodiment.

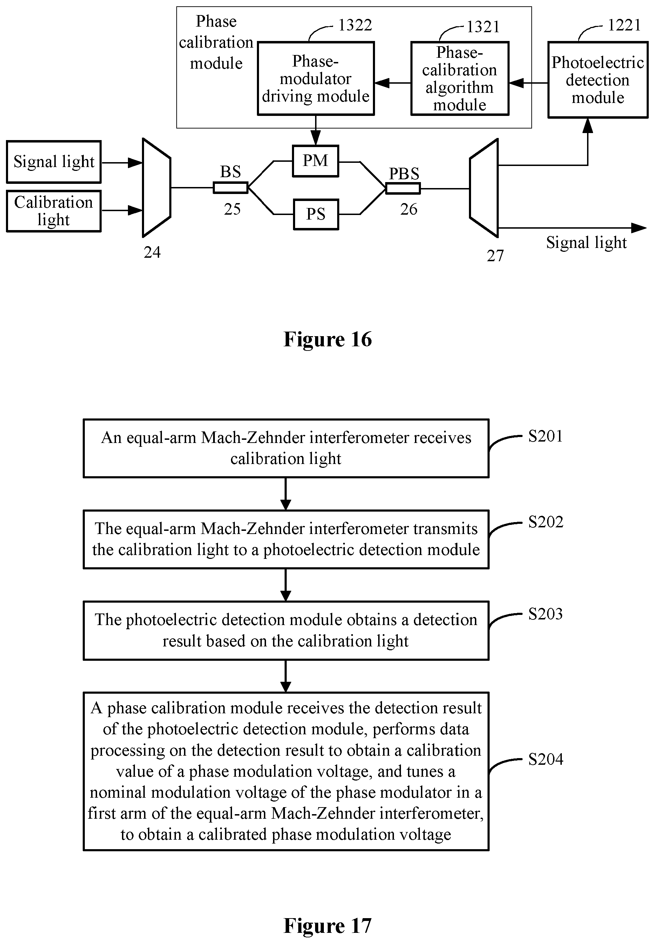

Figure 16 is a schematic diagram of a phase calibration device for preparing a QKD polarization state based on phase modulation according to an embodiment of the present disclosure. Such device includes an equal-arm Mach-Zehnder interferometer, a photoelectric detection module 1221, and a phase adjustment module. A phase modulator is disposed in a first arm of the equal-arm Mach-Zehnder interferometer. A phase shifter is disposed in a second arm of the equal-arm Mach-Zehnder interferometer. The photoelectric detection module 1221 is configured to detect interference of the equal-arm Mach-Zehnder interferometer and output an interference signal. In this embodiment, the phase adjustment module is called a phase calibration module. The phase calibration module receives a detection result of the photoelectric detection module 1221, performs data processing on the detection result to obtain a calibration value of a phase modulation voltage, and tunes a nominal modulation voltage of the phase modulator PM in the first arm of the equal-arm Mach-Zehnder interferometer. Thereby, a calibrated phase modulation voltage is obtained, achieving accurate preparation of QKD polarization states.

A structure of the phase calibration module is similar to that of the phase feedback module in the foregoing embodiments. A difference lies in a different built-in algorithm. In this embodiment, the phase calibration module includes a phase-calibration algorithm module 1321 and a phase-modulator driving module 1322, as shown in Figure 16. The phase-calibration algorithm module 1321 performs calculation for phase calibration, based on the interference signal from the photoelectric detection module 1221, to obtain the calibration value of the phase modulation voltage. Thereby, the nominal modulation voltage of the phase modulator PM is adjusted via the phase-modulator driving module 1322.

On a basis of the device as described above, a phase calibration method for preparing a QKD polarization state based on phase modulation is provided according to an embodiment of the present disclosure. As shown in Figure 17, the method includes steps S201 to S204.

In step S201, an equal-arm Mach-Zehnder interferometer receives calibration light. A first arm of the equal-arm Mach-Zehnder interferometer is provided with a phase modulator, and a second arm of the equal-arm Mach-Zehnder interferometer is provided with a phase shifter.

In step S202, the calibration light is transmitted to a photoelectric detection module.

In step S203, the photoelectric detection module obtains a detection result based on the calibration light.

In step S204, a phase calibration module receives a detection result of the photoelectric detection module, performs data processing on the detection result to obtain a calibration value of a phase modulation voltage, and tunes a nominal modulation voltage of the phase modulator in the first arm of the equal-arm Mach-Zehnder interferometer to obtain a calibrated phase modulation voltage. Thereby, accurate preparation of QKD polarization states is achieved.

Figure 16 is a schematic diagram of a structure in which calibration light and signal light are inputted along a same direction into a Mach-Zehnder interferometer according to an embodiment of the present disclosure. In such case, before being inputted into the equal-arm Mach-Zehnder interferometer, the calibration light and the signal light need to be combined via a first wavelength division multiplexer 24, transmitted via a fiber, and then split into two beams via a beam splitter 25. When outputting from the equal-arm Mach-Zehnder interferometer, the split beams are combined via a polarization beam splitter 26, transmitted via a fiber, and then split via a second wavelength division multiplexer 27 into the signal light and the calibration light. The calibration light is inputted into the photoelectric detection module for detection, to obtain the interference signal. The interference signal is inputted into the phase-calibration algorithm module for data processing, to obtain the calibration value of the phase modulation voltage. Thereby, the nominal modulation voltage of the phase modulator PM in the first arm of the equal-arm Mach-Zehnder interferometer is adjusted, and thus the calibrated phase modulation voltage is obtained, achieving accurate preparation of QKD polarization states.

A structure of the photoelectric detection module is not limited herein, as long as a function of photoelectric detection can be implemented. In an optional embodiment, the structure of the photoelectric detection module may refer to that as shown in Figure 7, Figure 8, Figure 11, and Figure 12.

A detailed process of phase calibration in this embodiment is as follows.

It is taken as an example that the photoelectric detection module includes a polarization controller and only one photo-detector.

(1) A voltage equal to zero is applied on the phase modulator in the first arm of the equal-arm Mach-Zehnder interferometer, and the polarization controller in the photoelectric detection module is adjusted.

(2) A count of the photo-detector is maximized through the adjustment.

(3) The voltage applied on the phase modulator is adjusted to be equal to a nominal voltage for a phase $\pi$, and it is determined whether the count of the photo-detector is minimized. In case of the determination being negative, the voltage applied on the phase modulator is adjusted until the count of the photo-detector is minimized. At such time, the voltage applied on the phase modulator is the calibration value corresponding to the phase $\pi$.

(4) The voltage applied on the phase modulator is adjusted to be equal to a nominal voltage for a phase $\pi/2$, and it is determined whether the count of the photo-detector is equal to a half of a sum of the maximized count and the minimized count.

In case of the determination being negative, the voltage applied on the phase modulator is adjusted until the count of the photo-detector is equal to a half of the sum of the maximized count and the minimized count. At such time, the voltage applied on the phase modulator is the calibration value corresponding to the phase $\pi/2$.

(5) The polarization controller in the photoelectric detection module or the phase shifter in one arm of the Mach-Zehnder interferometer is adjusted, until the count of the photo-detector is maximized.

(6) Then, the voltage applied on the phase modulator is adjusted to be equal to a nominal voltage for a phase $3\pi/2$, and it is determined whether the count of the photo-detector is minimized. In a case that the determination being negative, the voltage applied on the phase modulator is adjusted until the count of the photo-detector is minimized. At such time, the voltage applied on the phase modulator is the calibration value corresponding to the phase $3\pi/2$.

In a case that the photoelectric detection module does not include the polarization controller, the phase shifter disposed in the second arm of the equal-arm Mach-Zehnder interferometer may be adjusted to maximize or minimize the count of the photo-detector. In such a case, a process of adjusting the voltage applied on the phase modulator is similar to that described above, and is not described in detail herein.

Further, it is taken as an example that the photoelectric detection module includes the polarization controller and two photo-detectors, i.e. a first photo-detector and a second photo-detector. A process of phase calibration in this embodiment is as follows.

(1) A voltage equal to zero is applied on the phase modulator, and the polarization controller in the photoelectric detection module is adjusted.

(2) A ratio of a count of the first photo-detector to a count of the second photo-detector is maximized through the adjustment.

(3) The voltage applied on the phase modulator is adjusted to be equal to a nominal voltage for a phase $\pi$, and it is determined whether the ratio is minimized. In case of the determination is negative, the voltage applied on the phase modulator is adjusted until the ratio is minimized. At such time, the voltage applied on the phase modulator is the calibration value corresponding to the phase $\pi$.

(4) The voltage applied on the phase modulator is adjusted to be equal to a nominal voltage for a phase $\pi/2$, and it is determined whether the ratio is equal to 1.

In a case that the determination being negative, the voltage applied on the phase modulator is adjusted until the ratio is equal to 1. At such time, the voltage applied on the phase modulator is the calibration value corresponding to the phase $\pi/2$.

(5) The polarization controller in the photoelectric detection module or the phase shifter in one arm of the Mach-Zehnder interferometer is adjusted, until the ratio is maximized.

(6) Then, the voltage applied on the phase modulator is adjusted to be equal to a nominal voltage for a phase $3\pi/2$, and it is determined whether the ratio is minimized.

In a case of the determination being negative, the voltage applied on the phase modulator is adjusted until the ratio is minimized. At such time, the voltage applied on the phase modulator is the calibration value corresponding to the phase $3\pi/2$.

The aforementioned "maximum" and "minimum" for an output signal of the photoelectric detection module may be swapped.

In a case that the photoelectric detection module does not include the polarization controller, the phase shifter in the second arm of the equal-arm Mach-Zehnder interferometer may be adjusted to maximize or minimize the count of the photo-detector. In such case, a process of adjusting the voltage applied on the phase modulator is similar to that described above, is not described in detail herein.

In embodiments of the present disclosure, the equal-arm Mach-Zehnder interferometer receives the calibration light, and detects the calibration light to obtain a detection result for phase calibration.

Adjusting the polarization controller in the photoelectric detection module and adjusting the phase shifter are two means that are parallel and equivalent. Adjusting the polarization controller is preferable for maximizing the count, in a case that the signal light and the adjustment light are inputted along the same direction or time-division multiplexed. Adjusting the phase shifter is preferable for maximizing the count, in a case that the signal light and the adjustment light are inputted along opposite directions.

The phase adjustment module may apply the phase adjustment signal on the phase shifter and the phase modulator, so as to provide the zero phase difference in the Mach-Zehnder interferometer and calibrate the applied phase adjustment voltage. In such case, reference is made to Figure 4, which is a phase-feedback-and-phase-calibration device for preparing a QKD polarization state based on phase modulation according to an embodiment of the present disclosure. The device includes an equal-arm Mach-Zehnder interferometer, a photoelectric detection module, and a phase adjustment module. A phase modulator is disposed in an arm of the equal-arm Mach-Zehnder interferometer, and a phase shifter is disposed in another arm of the equal-arm Mach-Zehnder interferometer. Alternatively, the phase modulator PM and the phase shifter PS may be disposed in a same arm of the equal-arm Mach-Zehnder interferometer. The photoelectric detection module is configured to detect interference of the equal-arm Mach-Zehnder interferometer, and output an interference signal. In this embodiment, the phase adjustment module includes a phase feedback module and a phase calibration module. The phase feedback module and the phase calibration module receive a detection result from the photoelectric detection module. The phase feedback module performs data processing on the detection result. The phase feedback module obtains the interference signal, and transmits the interference signal to a phase-feedback algorithm module. The phase-feedback algorithm module performs data processing on the interference signal to obtain a phase feedback signal, and then transmits the phase feedback signal to a phase-shifter driving module to adjust the phase shifter. Hence, the phase difference between two arms of the equal-arm Mach-Zehnder interferometer turns zero, and phase stabilization is achieved. The phase calibration module transmits the received interference signal to a phase-calibration algorithm module for data processing to obtain a calibration value of a phase modulation voltage, tunes a nominal modulation voltage of the phase modulator in an arm of the equal-arm Mach-Zehnder interferometer, and thereby obtains a calibrated phase modulation voltage, achieving accurate preparation of QKD polarization states. Hence, stable and accurate QKD polarization states are prepared at a high speed.

The phase adjustment module in this embodiment includes the phase feedback module and the phase calibration module, such that the device for preparing the QKD polarization state based on phase modulation is capable of both phase feedback and phase calibration. In this embodiment, the adjustment light (including the feedback light or the calibration light) and the signal light may be inputted along the same direction, inputted along opposite directions, or time-division multiplexed, which is not limited herein. A manner of inputting the adjustment light may refer to relevant description in the foregoing embodiments, and is not described again herein.

In addition, a structure of the photoelectric detection module and a means for phase feedback and phase calibration may refer to relevant description in the foregoing embodiments.

In embodiments of the present disclosure, phase feedback and phase calibration at the transmitting terminal are performed based on the equal-arm Mach-Zehnder interferometer. An issue of phase drifts and phase deviation in a QKD encoder can be addressed. An calibration operation meets a requirement on safety of the QKD, the feedback is fast, and the system is simple and reliable. The phase modulation and the phase calibration improve accuracy and reduce an error rate of the prepared polarization states, and thereby an error ate of the QKD is decreased.

The embodiments of the present disclosure are described in a progressive manner, and each embodiment places emphasis on the difference from other embodiments. Therefore, one embodiment can refer to other embodiments for the same or similar parts.

It should be noted that, the relationship terms such as "first", "second" and the like are only used herein to distinguish one entity or operation from another, rather than to necessitate or imply that an actual relationship or order exists between the entities or operations. Furthermore, the terms such as "include", "comprise" or any other variants thereof means to be non-exclusive. Therefore, a process, a method, an article or a device including a series of elements include not only the disclosed elements but also other elements that are not clearly enumerated, or further include inherent elements of the process, the method, the article or the device. Unless expressively limited, the statement "including a... " does not exclude the case that other similar elements may exist in the process, the method, the article or the device other than enumerated element.

With the description of the embodiments disclosed above, those skilled in the art may implement or use technical solutions of the present disclosure.

**Claims**

1. A device for preparing a Quantum Key Distribution, QKD, polarization state based on phase modulation, comprising:

   a light source module, configured to generate signal light;
   an equal-arm interferometer (11), wherein the equal-arm interferometer comprises a first arm (111) and a second arm (112);
   a phase modulator (101) that is inserted into the first arm (111) or the second arm (112); and
   a phase shifter (102) that is inserted into the first arm (111) or the second arm (112);
   wherein the equal-arm interferometer (11) is configured to receive the signal light and output the QKD polarization state;
   wherein the devices further comprises:

      a photoelectric detection module (12), configured to detect interference of the equal-arm interferometer (11) and output an interference signal; and
      a phase adjustment module (13), configured to adjust, based on the interference signal, a phase in the equal-arm interferometer (11) to modulate the QKD polarization state; and

   wherein the photoelectric detection module (12) and the phase adjustment module (13) are provided at a transmitting terminal.

2. The device according to claim 1, wherein the phase adjustment module (13) is a phase feedback module,

   the phase feedback module (131) is connected to the phase shifter (102); and
   the phase feedback module (131) is configured to adjust, based on the interference signal, a voltage applied on the phase shifter (102) to provide a phase difference, equal to zero or an integer multiple of $2\pi$, between the first arm (111) and the second arm (112).

3. The device according to claim 1, wherein the phase adjustment module (13) is a phase calibration module (132),

   the phase calibration module (132) is connected to the phase modulator (101); and
   the phase calibration module (132) is configured to:

      tune, based on the interference signal, a nominal modulation voltage applied on the phase modulator (101) to obtain a calibrated phase modulation voltage, and
      apply the calibrated phase modulation voltage on the phase modulator (101) to stabilize the phase in the equal-arm interferometer (11).

4. The device claim 1, wherein the phase adjustment module comprises a phase calibration module (1332) and a phase feedback module (1331),

the phase calibration module (1332) is connected to the phase modulator (101);
the phase calibration module (1332) is configured to:

tune, based on the interference signal, a nominal modulation voltage applied on the phase modulator (101) to obtain a calibrated phase modulation voltage, and
apply the calibrated phase modulation voltage on the phase modulator (101) to stabilize the phase in the equal-arm interferometer (11);

the phase feedback module (1331) is connected to the phase shifter (102); and
the phase feedback module is configured to adjust, based on the interference signal, a voltage applied on the phase shifter (102) to provide a phase difference, equal to zero or an integer multiple of $2\pi$, between the first arm (111) and the second arm (112).

5. The device according to any one of claims 1 to 4, wherein the photoelectric detection module comprises one photo-detector.

6. The device according to claim 5, wherein the device further comprises a polarization controller and a polarization beam splitter, and
the polarization controller, the polarization beam splitter, and the photo-detector are sequentially arranged along a transmission direction of a light beam.

7. The device according to any one of claims 1 to 4, wherein the photoelectric detection module comprises a first photo-detector and a second photo-detector.

8. The device according to claim 7, wherein the device further comprises a polarization controller and a polarization beam splitter,

the polarization controller is configured to receive adjustment light that is received and transmitted via the equal-arm interferometer (11), and the adjustment light is inputted into the polarization beam splitter via the polarization controller;
the polarization beam splitter is configured to split the adjustment light into transmitted light and reflected light, and output the transmitted light and the reflected light;
the transmitted light is inputted into the first photo-detector, and the first photo-detector is configured to convert the transmitted light signal into a first electrical signal; and
the reflected light is inputted into the second photo-detector, and the second photo-detector is configured to convert the reflected light signal into a second electrical signal.

9. A method for preparing a Quantum Key Distribution, QKD, polarization state based on phase modulation, wherein the method is applied to the device according to any one of claims 1 to 8, and the method comprises:

receiving the adjustment light, by the equal-arm interferometer;
transmitting, by the equal-arm interferometer, the adjustment light to the photoelectric detection module;
receiving, by the photoelectric detection module, the adjustment light to obtain the interference signal;
receiving the interference signal by the phase adjustment module; and
adjusting, by the phase adjustment module based on the interference signal, the phase in the equal-arm interferometer to prepare the QKD polarization state.

10. The method according to claim 9, wherein in a case that the device comprises the phase feedback module, the method comprises:

receiving (S101) feedback light by the equal-arm interferometer;
transmitting (S102), by the equal-arm interferometer, the feedback light to the photoelectric detection module;
receiving (S103), by the photoelectric detection module, the feedback light to obtain a photoelectric detection signal;
receiving (S104) the photoelectric detection signal by the phase feedback module;

determining (S104), by the phase feedback module, whether the photoelectric detection signal is the interference signal reflecting the zero phase difference between the first arm and the second arm;

performing (S104), by the phase feedback module, data processing to obtain a phase adjustment signal; and

applying (S104), by the phase feedback module, the phase adjustment signal on the phase shifter to prepare the QKD polarization state, wherein the phase adjustment signal applied on the phase shifter provides the zero phase difference between the first arm and the second arm.

11. The method according to claim 9, wherein in a case that the device comprises the phase calibration module, the method comprises:

receiving (S201) calibration light by the equal-arm interferometer;

transmitting (S202) the calibration light to the photoelectric detection module;

obtaining (S203), by the photoelectric detection module, a detection result based on the calibration light;

receiving (S204), by the phase calibration module, the detection result of the photoelectric detection module;

performing (S204), by the phase calibration module, data processing on the detection result to obtain a calibration value of a phase modulation voltage;

tuning (S204), by the phase calibration module, a nominal modulation voltage of the phase modulator, to obtain a calibrated phase modulation voltage for preparing the QKD polarization state.

12. The method according to claim 11, wherein in a case that the photoelectric detection module comprises the one photo-detector, the polarization controller, and the polarization beam splitter, the method comprises:

applying a voltage equal to zero on the phase modulator, and adjusting the polarization controller to maximize a count of the photo-detector;

adjusting the voltage applied on the phase modulator to be equal to a nominal voltage for a phase $\pi$, and determining whether the count of the photo-detector is minimized;

adjusting the voltage applied on the phase modulator until the count of the photo-detector is minimized, in a case that the count of the photo-detector is not minimized;

determining the adjusted voltage applied on the phase modulator as the calibration value corresponding to the phase $\pi$;

adjusting the voltage applied on the phase modulator to be equal to a nominal voltage for a phase $\pi/2$, and determining whether the count of the photo-detector is equal to a half of a sum of the maximized count and the minimized count;

adjusting the voltage applied on the phase modulator until the count of the photo-detector is equal to a half of the sum of the maximized count and the minimized count, in a case that the count of the photo-detector is not equal to a half of the sum of the maximized count and the minimized count;

determining the adjusted voltage applied on the phase modulator as the calibration value corresponding to the phase $\pi/2$;

adjusting the polarization controller or the phase shifter, until the count of the photo-detector is maximized; and

adjusting the voltage applied on the phase modulator to be equal to a nominal voltage for a phase $3\pi/2$, and determining whether the count of the photo-detector is minimized;

adjusting the voltage applied on the phase modulator until the count of the photo-detector is minimized, in a case that the count of the photo-detector is not minimized;

determining the adjusted voltage applied on the phase modulator as the calibration value corresponding to the phase $3\pi/2$.

13. The method according to claim 11, wherein in a case that the photoelectric detection module comprises the first photo-detector, the second photo-detector, the polarization controller, and the polarization beam splitter, the method comprises:

applying a voltage equal to zero on the phase modulator, and adjusting the polarization controller to maximize a ratio of a count of the first photo-detector to a count of the second photo-detector;

adjusting the voltage applied on the phase modulator to be equal to a nominal voltage for a phase $\pi$, and determining whether the ratio is minimized;

adjusting the voltage applied on the phase modulator until the ratio is minimized, in a case that the ratio is not minimized;

determining the adjusted voltage applied on the phase modulator is the calibration value corresponding to the phase $\pi$;

adjusting the voltage applied on the phase modulator to be equal to a nominal voltage for a phase $\pi/2$, and determining whether the ratio is equal to 1;

adjusting the voltage applied on the phase modulator until the ratio is equal to 1, in a case that the ratio is not equal to 1;

determining the voltage applied on the phase modulator to be the calibration value corresponding to the phase $\pi/2$;

adjusting the polarization controller or adjusting the phase shifter, until the ratio is maximized; and

adjusting the voltage applied on the phase modulator to be equal to a nominal voltage for a phase $3\pi/2$, and determining whether the ratio is minimized;

adjusting the voltage applied on the phase modulator until the ratio is minimized, in a case that the ratio is not minimized; and

determining the adjusted voltage applied on the phase modulator as the calibration value corresponding to the phase $3\pi/2$.

14. The method according to claim 9, wherein the method further comprises: receiving the signal light by the equal-arm interferometer, wherein:

the signal light and the adjustment light are time-division multiplexed over a light signal;

the signal light and the adjustment light are inputted along a same direction into the equal-arm interferometer; or

the signal light and the adjustment light are inputted along opposite directions into the equal-arm interferometer.


**Patentansprüche**

1. Vorrichtung zur Vorbereitung einer Quantenschlüsselverteilung, QKD, auf der Grundlage eines Polarisationszustandes basierend auf Phasenmodulation umfassend:

ein Lichtquellenmodul, das zur Erzeugung von Signallicht ausgebildet ist;

ein gleicharmiges Interferometer (11), wobei das gleicharmige Interferometer einen ersten Arm (111) und einen zweiten Arm (112) umfasst;

einen Phasenmodulator (101), der in dem ersten Arm (111) oder dem zweiten Arm (112) angeordnet ist; und

einen Phasenschieber (102), der in dem ersten Arm (111) oder dem zweiten Arm (112) angeordnet ist;

wobei das gleicharmige Interferometer (11) derart ausgebildet ist, dass es das Signallicht empfängt und den QKD-Polarisationszustand ausgibt;

wobei die Vorrichtung weiter umfasst:

ein photoelektrisches Detektionsmodul (12), das derart ausgebildet ist, dass es die Interferenz des gleicharmigen Interferometers (11) detektiert und ein Interferenzsignal ausgibt; und

ein Phasenanpassungsmodul (13), das derart ausgebildet ist, dass es auf der Grundlage des Interferenzsignals eine Phase im gleicharmigen Interferometer (11) anpasst, um den QKD-Polarisationszustand zu modulieren; und

wobei das photoelektrische Detektionsmodul (12) und das Phasenanpassungsmodul (13) an einem Sendeterminal vorgesehen sind.

2. Vorrichtung nach Anspruch 1, wobei das Phasenanpassungsmodul (13) ein Phasenrückkopplungsmodul ist,

wobei das Phasenrückkopplungsmodul (131) mit dem Phasenschieber (102) verbunden ist; und

wobei das Phasenrückkopplungsmodul (131) derart ausgebildet ist, dass es auf der Grundlage des Interferenzsignals eine an den Phasenschieber (102) angelegte Spannung so anpasst, dass zwischen dem ersten Arm (111) und dem zweiten Arm (112) eine Phasendifferenz entsteht, die gleich Null oder einem ganzzahligen Vielfachen von $2\pi$ ist.

3. Vorrichtung nach Anspruch 1, wobei das Phasenanpassungsmodul (13) ein Phasenkalibrierungsmodul (132) ist,

wobei das Phasenkalibrierungsmodul (132) mit dem Phasenmodulator (101) verbunden ist; und

wobei das Phasenkalibrierungsmodul (132) derart ausgebildet ist, dass es: auf der Grundlage des Interferenzsignals eine an den Phasenmodulator (101) angelegte Nennmodulationsspannung abstimmt, um eine kalibrierte Phasenmodulationsspannung zu erhalten, und

die kalibrierte Phasenmodulationsspannung an den Phasenmodulator (101) anlegt, um die Phase im gleicharmigen Interferometer (11) zu stabilisieren.

4. Vorrichtung nach Anspruch 1, wobei das Phasenanpassungsmodul ein Phasenkalibrierungsmodul (1332) und ein Phasenrückkopplungsmodul (1331) umfasst,

wobei das Phasenkalibrierungsmodul (1332) mit dem Phasenmodulator (101) verbunden ist;
wobei das Phasenkalibrierungsmodul (1332) ausgebildet ist, um:

auf der Grundlage des Interferenzsignals eine an den Phasenmodulator (101) angelegte Nennmodulationsspannung abzustimmen, um eine kalibrierte Phasenmodulationsspannung zu erhalten, und
die kalibrierte Phasenmodulationsspannung an den Phasenmodulator (101) anzulegen, um die Phase im gleicharmigen Interferometer (11) zu stabilisieren;

wobei das Phasenrückkopplungsmodul (1331) mit dem Phasenschieber (102) verbunden ist; und
wobei das Phasenrückkopplungsmodul derart ausgebildet ist, dass es auf der Grundlage des Interferenzsignals eine an den Phasenschieber (102) angelegte Spannung anpasst, um eine Phasendifferenz zwischen dem ersten Arm (111) und dem zweiten Arm (112) zu erzeugen, die gleich Null oder einem ganzzahligen Vielfachen von $2\pi$ ist.

5. Vorrichtung nach einem der Ansprüche 1 bis 4, wobei das photoelektrische Detektionsmodul einen Photodetektor umfasst.

6. Vorrichtung nach Anspruch 5, wobei die Vorrichtung weiter einen Polarisationsregler und einen Polarisationsstrahlteiler umfasst, und
wobei der Polarisationsregler, der Polarisationsstrahlteiler und der Photodetektor entlang einer Übertragungsrichtung eines Lichtstrahls sequenziell angeordnet sind.

7. Vorrichtung nach einem der Ansprüche 1 bis 4, wobei das photoelektrische Detektionsmodul einen ersten Photodetektor und einen zweiten Photodetektor umfasst.

8. Vorrichtung nach Anspruch 7, wobei die Vorrichtung weiter einen Polarisationsregler und einen Polarisationsstrahlteiler umfasst,

wobei der Polarisationsregler derart ausgebildet ist, dass er über das gleicharmige Interferometer (11) empfangenes und gesendetes Anpassungslicht empfängt, und das Anpassungslicht über den Polarisationsregler in den Polarisationsstrahlteiler eingegeben wird;
wobei der Polarisationsstrahlteiler derart ausgebildet ist, dass er das Anpassungslicht in durchgelassenes Licht und reflektiertes Licht aufteilt und das durchgelassene Licht und das reflektierte Licht ausgibt;
wobei das durchgelassene Licht in den ersten Photodetektor eingeleitet wird, wobei der erste Photodetektor derart ausgebildet ist, dass er das durchgelassene Lichtsignal in ein erstes elektrisches Signal umwandelt; und
wobei das reflektierte Licht in den zweiten Photodetektor eingeleitet wird, und der zweite Photodetektor derart ausgebildet ist, dass er das reflektierte Lichtsignal in ein zweites elektrisches Signal umwandelt.

9. Verfahren zur Vorbereitung einer Quantenschlüsselverteilung, QKD, auf der Grundlage eines Polarisationszustandes basierend auf Phasenmodulation, wobei das Verfahren auf die Vorrichtung gemäss einem der Ansprüche 1 bis 8 angewendet wird, und wobei das Verfahren umfasst:

Empfangen des Anpassungslichts durch das gleicharmige Interferometer;
Senden des Anpassungslichts durch das gleicharmige Interferometer an das photoelektrische Detektionsmodul;
Empfangen des Anpassungslichts durch das photoelektrische Detektionsmodul, um das Interferenzsignal zu erhalten;
Empfangen des Interferenzsignals durch das Phasenanpassungsmodul; und
Anpassen der Phase im gleicharmigen Interferometer durch das Phasenanpassungsmodul auf der Grundlage des Interferenzsignals, um den QKD-Polarisationszustand vorzubereiten.

10. Verfahren nach Anspruch 9, wobei in einem Fall, in dem die Vorrichtung das Phasenrückkopplungsmodul umfasst, das Verfahren umfasst:

Empfangen (S101) von Rückkopplungslicht durch das gleicharmige Interferometer;

Senden (S102) des Rückkopplungslichts durch das gleicharmige Interferometer an das photoelektrische Detektionsmodul;

Empfangen (S103) des Rückkopplungslichts durch das photoelektrische Detektionsmodul, um ein photoelektrisches Detektionssignal zu erhalten;

Empfangen (S104) des photoelektrischen Detektionssignals durch das Phasenrückkopplungsmodul;

Bestimmen (S104) durch das Phasenrückkopplungsmodul, ob das photoelektrische Detektionssignal das Interferenzsignal ist, das die Nullphasenverschiebung zwischen dem ersten Arm und dem zweiten Arm widerspiegelt;

Durchführen (S104) einer Datenverarbeitung durch das Phasenrückkopplungsmodul, um ein Phasenanpassungssignal zu erhalten; und

Anlegen (S104) des Phasenanpassungssignals durch das Phasenrückkopplungsmodul an den Phasenschieber, um den QKD-Polarisationszustand vorzubereiten, wobei das an den Phasenschieber angelegte Phasenanpassungssignal die Nullphasenverschiebung zwischen dem ersten Arm und dem zweiten Arm bereitstellt.

11. Verfahren nach Anspruch 9, wobei in einem Fall, in dem die Vorrichtung das Phasenkalibrierungsmodul umfasst, das Verfahren umfasst:

Empfangen (S201) von Kalibrierungslicht durch das gleicharmige Interferometer;

Senden (S202) des Kalibrierungslichts an das photoelektrische Detektionsmodul;

Erhalten (S203) eines Detektionsergebnisses auf der Grundlage des Kalibrierungslichts durch das photoelektrische Detektionsmodul;

Empfangen (S204) des Detektionsergebnisses des photoelektrischen Detektionsmoduls durch das Phasenkalibrierungsmodul;

Durchführen (S204) einer Datenverarbeitung des Detektionsergebnisses durch das Phasenkalibrierungsmodul, um einen Kalibrierungswert einer Phasenmodulationsspannung zu erhalten;

Abstimmen (S204) einer Nennmodulationsspannung des Phasenmodulators durch das Phasenkalibrierungsmodul, um eine kalibrierte Phasenmodulationsspannung zum Vorbereiten des QKD-Polarisationszustands zu erhalten.

12. Verfahren nach Anspruch 11, wobei in einem Fall, in dem das photoelektrische Detektionsmodul den einen Photodetektor, den Polarisationsregler und den Polarisationsstrahlteiler umfasst, das Verfahren umfasst:

Anlegen einer Spannung gleich Null an den Phasenmodulator und Anpassen des Polarisationsreglers, um eine Zählung des Photodetektors zu maximieren;

Anpassen der an den Phasenmodulator angelegten Spannung auf eine Nennspannung für eine Phase $\pi$ und Bestimmen, ob die Zählung des Photodetektors minimiert ist;

Anpassen der an den Phasenmodulator angelegten Spannung, bis die Zählung des Photodetektors minimiert ist, falls die Zählung des Photodetektors nicht minimiert ist;

Bestimmen der auf den Phasenmodulator angelegten eingestellten Spannung als Kalibrierwert, der der Phase $\pi$ entspricht;

Anpassen der an den Phasenmodulator angelegten Spannung, sodass sie einer Nennspannung für eine Phase $\pi/2$ entspricht, und Bestimmen, ob die Zählung des Photodetektors gleich der Hälfte einer Summe aus der maximierten Zählung und der minimierten Zählung ist;

Anpassen der an den Phasenmodulator angelegten Spannung, bis die Zählung des Photodetektors gleich der Hälfte der Summe aus der maximierten Zählung und der minimierten Zählung ist, falls die Zählung des Photodetektors nicht gleich der Hälfte der Summe aus der maximierten Zählung und der minimierten Zählung ist;

Bestimmen der angepassten Spannung, die an den Phasenmodulator angelegt wird, als Kalibrierungswert, der der Phase $\pi/2$ entspricht;

Anpassen des Polarisationsreglers oder des Phasenschiebers, bis die Zählung des Photodetektors maximiert ist; und

Anpassen der an den Phasenmodulator angelegten Spannung auf eine Nennspannung für eine Phase $3\pi/2$ und Bestimmen, ob die Zählung des Photodetektors minimiert ist;

Anpassen der an den Phasenmodulator angelegten Spannung, bis die Zählung des Photodetektors minimiert ist, falls die Zählung des Photodetektors nicht minimiert ist;

Bestimmen der angepassten Spannung, die an den Phasenmodulator angelegt wird, als Kalibrierungswert, der der Phase $3\pi/2$ entspricht.

13. Verfahren nach Anspruch 11, wobei in einem Fall, in dem das photoelektrische Detektionsmodul den ersten Photodetektor, den zweiten Photodetektor, den Polarisationsregler und den Polarisationsstrahlteiler umfasst, das Verfahren umfasst:

   Anlegen einer Spannung gleich Null an den Phasenmodulator und Anpassen des Polarisationsreglers, um ein Verhältnis einer Zählung des ersten Photodetektors zu einer Zählung des zweiten Photodetektors zu maximieren;

   Anpassen der an den Phasenmodulator angelegten Spannung, sodass sie einer Nennspannung für eine Phase $\pi$ entspricht, und Bestimmen, ob das Verhältnis minimiert ist;

   Anpassen der an den Phasenmodulator angelegten Spannung, bis das Verhältnis minimiert ist, falls das Verhältnis nicht minimiert ist;

   Bestimmen, ob die angepasste Spannung, die an den Phasenmodulator angelegt wird, dem Kalibrierungswert entspricht, der der Phase $\pi$ entspricht;

   Anpassen der an den Phasenmodulator angelegten Spannung, bis sie gleich einer Nennspannung für eine Phase $\pi/2$ ist, und Bestimmen, ob das Verhältnis gleich 1 ist;

   Anpassen der an den Phasenmodulator angelegten Spannung, bis das Verhältnis gleich 1 ist, falls das Verhältnis nicht gleich 1 ist;

   Bestimmen der an den Phasenmodulator angelegten Spannung als den Kalibrierungswert, der der Phase $\pi/2$ entspricht;

   Anpassen des Polarisationsreglers oder Anpassen des Phasenschiebers, bis das Verhältnis maximiert ist; und

   Anpassen der an den Phasenmodulator angelegten Spannung auf eine Nennspannung für eine Phase $3\pi/2$ und Bestimmen, ob das Verhältnis minimiert ist;

   Anpassen der an den Phasenmodulator angelegten Spannung, bis das Verhältnis minimiert ist,

   falls das Verhältnis nicht minimiert ist; und

   Bestimmen der eingestellten Spannung, die an den Phasenmodulator angelegt wird, als Kalibrierungswert, der der Phase $3\pi/2$ entspricht.

14. Verfahren nach Anspruch 9, wobei das Verfahren weiter umfasst: Empfangen des Signallichts durch das gleicharmige Interferometer, wobei:

   das Signallicht und das Anpassungslicht über ein Lichtsignal zeitmultiplexiert sind;

   das Signallicht und das Anpassungslicht entlang derselben Richtung in das gleicharmige Interferometer eingegeben werden; oder

   das Signallicht und das Anpassungslicht entlang entgegengesetzten Richtungen in das gleicharmige Interferometer eingegeben werden.

## Revendications

1. Dispositif pour préparer une distribution quantique de clés, QKD, basée sur l'état de polarisation à partir d'une modulation de phase, comprenant :

   un module de source lumineuse, configuré pour générer une lumière de signal ;

   un interféromètre à bras égaux (11), l'interféromètre à bras égaux comprenant un premier bras (111) et un second bras (112) ;

   un modulateur de phase (101) qui est inséré dans le premier bras (111) ou le deuxième bras (112) ; et

   un déphaseur (102) qui est inséré dans le premier bras (111) ou le deuxième bras (112) ;

   l'interféromètre à bras égaux (11) étant configuré pour recevoir la lumière de signal et émettre l'état de polarisation QKD ;

   le dispositif comprenant en outre :

      un module de détection photoélectrique (12), configuré pour détecter l'interférence de l'interféromètre à bras égaux (11) et émettre un signal d'interférence ; et

      un module d'ajustement de phase (13), configuré pour ajuster, sur la base du signal d'interférence, une phase dans l'interféromètre à bras égaux (11) afin de moduler l'état de polarisation QKD ; et

   dans lequel le module de détection photoélectrique (12) et le module d'ajustement de phase (13) sont prévus au niveau d'un terminal de transmission.

**2.** Dispositif selon la revendication 1, dans lequel le module d'ajustement de phase (13) est un module de rétroaction de phase,

le module de rétroaction de phase (131) est connecté au déphaseur (102) ; et
le module de rétroaction de phase (131) est configuré pour ajuster, sur la base du signal d'interférence, une tension appliquée au déphaseur (102) afin de fournir une différence de phase, égale à zéro ou à un multiple entier de $2\pi$, entre le premier bras (111) et le deuxième bras (112).

**3.** Dispositif selon la revendication 1, dans lequel le module d'ajustement de phase (13) est un module d'étalonnage de phase (132),

le module d'étalonnage de phase (132) est connecté au modulateur de phase (101) ; et
le module d'étalonnage de phase (132) est configuré pour :

régler, sur la base du signal d'interférence, une tension de modulation nominale appliquée au modulateur de phase (101) afin d'obtenir une tension de modulation de phase étalonnée, et
appliquer la tension de modulation de phase étalonnée sur le modulateur de phase (101) afin de stabiliser la phase dans l'interféromètre à bras égaux (11).

**4.** Dispositif selon la revendication 1, dans lequel le module d'ajustement de phase comprend un module d'étalonnage de phase (1332) et un module de rétroaction de phase (1331),

le module d'étalonnage de phase (1332) est connecté au modulateur de phase (101) ;
le module d'étalonnage de phase (1332) est configuré pour :

régler, sur la base du signal d'interférence, une tension de modulation nominale appliquée au modulateur de phase (101) afin d'obtenir une tension de modulation de phase étalonnée, et
appliquer la tension de modulation de phase étalonnée sur le modulateur de phase (101) afin de stabiliser la phase dans l'interféromètre à bras égaux (11) ;

le module de rétroaction de phase (1331) est connecté au déphaseur (102) ; et
le module de rétroaction de phase est configuré pour ajuster, sur la base du signal d'interférence, une tension appliquée sur le déphaseur (102) afin de fournir une différence de hase, égale à zéro ou à un multiple entier de $2\pi$, entre le premier bras (111) et le deuxième bras (112).

**5.** Dispositif selon l'une quelconque des revendications 1 à 4, dans lequel le module de détection photoélectrique comprend un photodétecteur.

**6.** Dispositif selon la revendication 5, dans lequel le dispositif comprend en outre un contrôleur de polarisation et un séparateur de faisceaux polarisant, et
le contrôleur de polarisation, le séparateur de faisceaux polarisant et le photodétecteur sont isposés séquentiellement le long d'une direction de transmission d'un faisceau lumineux.

**7.** Dispositif selon l'une quelconque des revendications 1 à 4, dans lequel le module de détection photoélectrique comprend un premier photodétecteur et un deuxième photodétecteur.

**8.** Dispositif selon la revendication 7, dans lequel le dispositif comprend en outre un contrôleur de polarisation et un séparateur de faisceaux polarisant,

le contrôleur de polarisation est configuré pour recevoir de la lumière d'ajustement qui est reçue et transmise via l'interféromètre à bras égaux (11), et la lumière d'ajustement est entrée dans le séparateur de faisceaux polarisant via le contrôleur de polarisation ;
le séparateur de faisceaux polarisant est configuré pour diviser la lumière d'ajustement en lumière transmise et lumière réfléchie, et pour émettre la lumière transmise et la lumière réfléchie ;
la lumière transmise est introduite dans le premier photodétecteur, et le premier photodétecteur est configuré pour convertir le signal de lumière transmise en un premier signal électrique ; et
la lumière réfléchie est introduite dans le deuxième photodétecteur, et le deuxième photodétecteur est configuré pour convertir le signal de lumière réfléchie en un deuxième signal électrique.

9. Procédé de préparation d'une distribution quantique de clés, QKD, basée sur l'état de polarisation à partir d'une modulation de phase, dans lequel le procédé est appliqué au dispositif selon l'une quelconque des revendications 1 à 8, et le procédé comprend :

recevoir la lumière d'ajustement par l'interféromètre à bras égaux ;
transmettre, par l'interféromètre à bras égaux, la lumière d'ajustement au module de détection photoélectrique ;
recevoir, par le module de détection photoélectrique, la lumière d'ajustement pour obtenir le signal d'interférence ;
recevoir le signal d'interférence par le module d'ajustement de phase ; et
ajuster, par le module d'ajustement de phase sur la base du signal d'interférence, la phase dans l'interféromètre à bras égaux pour préparer l'état de polarisation QKD.

10. Procédé selon la revendication 9, dans lequel, dans le cas où le dispositif comprend le module de rétroaction de phase, le procédé comprend :

recevoir (S101) de la lumière de rétroaction par l'interféromètre à bras égaux ;
transmettre (S102), par l'interféromètre à bras égaux, la lumière de rétroaction au module de détection photoélectrique ;
recevoir (S103), par le module de détection photoélectrique, la lumière de rétroaction pour obtenir un signal de détection photoélectrique ;
recevoir (S104) le signal de détection photoélectrique par le module de rétroaction de phase ;
déterminer (S104), par le module de rétroaction de phase, si le signal de détection photoélectrique est le signal d'interférence reflétant la différence de phase nulle entre le premier bras et le deuxième bras ;
effectuer (S104), par le module de rétroaction de phase, un traitement de données pour obtenir un signal d'ajustement de phase ; et
appliquer (S104), par le module de rétroaction de phase, le signal d'ajustement de phase sur le déphaseur afin de préparer l'état de polarisation QKD, dans lequel le signal d'ajustement de phase appliqué sur le déphaseur fournit la différence de phase nulle entre le premier bras et le deuxième bras.

11. Procédé selon la revendication 9, dans lequel, dans le cas où le dispositif comprend le module d'étalonnage de phase, le procédé comprend :

recevoir (S201) la lumière d'étalonnage par l'interféromètre à bras égaux ;
transmettre (S202) la lumière d'étalonnage au module de détection photoélectrique ;
obtenir (S203), par le module de détection photoélectrique, un résultat de détection basé sur la lumière d'étalonnage ;
recevoir (S204), par le module d'étalonnage de phase, le résultat de détection du module de détection photoélectrique ;
effectuer (S204), par le module d'étalonnage de phase, un traitement des données sur le résultat de détection afin d'obtenir une valeur d'étalonnage d'une tension de modulation de phase ;
régler (S204), par le module d'étalonnage de phase, une tension de modulation nominale du modulateur de phase, afin d'obtenir une tension de modulation de phase étalonnée pour préparer l'état de polarisation QKD.

12. Procédé selon la revendication 11, dans lequel, dans le cas où le module de détection photoélectrique comprend le photodétecteur, le contrôleur de polarisation et le séparateur de faisceaux polarisant, le procédé comprend :

appliquer une tension égale à zéro sur le modulateur de phase, et ajuster le contrôleur de polarisation pour maximiser un comptage du photodétecteur ;
ajuster la tension appliquée sur le modulateur de phase pour qu'elle soit égale à une tension nominale pour une phase $\pi$, et déterminer si le comptage du photodétecteur est minimisé ;
ajuster la tension appliquée sur le modulateur de phase jusqu'à ce que le comptage du photodétecteur soit minimisé, dans le cas où le comptage du photodétecteurs n'est pas minimisé ;
déterminer la tension ajustée appliquée sur le modulateur de phase comme étant la valeur d'étalonnage correspondant à la phase $\pi$ ;
ajuster la tension appliquée sur le modulateur de phase pour qu'elle soit égale à une tension nominale pour une phase $\pi/2$, et déterminer si le comptage du photodétecteur est égal à la moitié de la somme du comptage maximal et du comptage minimal ;
ajuster la tension appliquée au modulateur de phase jusqu'à ce que le comptage du photodétecteur soit égal à la moitié de la somme du comptage maximal et du comptage minimal, dans le cas où le comptage du photodétecteur n'est pas égal à la moitié de la somme du comptage maximal et du comptage minimal ; déterminer la tension ajustée appliquée au modulateur de phase comme étant la valeur d'étalonnage correspondant à la phase $\pi/2$ ; ajuster le contrôleur de polarisation ou le déphaseur jusqu'à ce que le comptage du photodétecteurs soit maximisé ; et ajuster la tension appliquée sur le modulateur de phase pour qu'elle soit égale à une tension nominale pour une phase $3\pi/2$, et déterminer si le comptage du photodétecteur est minimisé ; ajuster la tension appliquée sur le modulateur de phase jusqu'à ce que le comptage du photodétecteurs soit minimisé, dans le cas où le comptage du photodétecteurs n'est pas minimisé ; déterminer la tension ajustée appliquée sur le modulateur de phase comme étant la valeur d'étalonnage correspondant à la phase $3\pi/2$.

13. Procédé selon la revendication 11, dans lequel, dans le cas où le module de détection photoélectrique comprend le premier photodétecteur, le deuxième photodétecteur, le contrôleur de polarisation et le séparateur de faisceaux polarisant, le procédé comprend :

appliquer une tension égale à zéro sur le modulateur de phase, et ajuster le contrôleur de polarisation afin de maximiser un rapport entre un comptage du premier photodétecteur et un comptage du deuxième photodétecteur ;

ajuster la tension appliquée sur le modulateur de phase pour qu'elle soit égale à une tension nominale pour une phase $\pi$, et déterminer si le rapport est minimisé ;

ajuster la tension appliquée sur le modulateur de phase jusqu'à ce que le rapport soit minimisé, dans le cas où le rapport n'est pas minimisé ;

déterminer la tension ajustée appliquée sur le modulateur de phase comme étant la valeur d'étalonnage correspondant à la phase $\pi$ ;

ajuster la tension appliquée sur le modulateur de phase pour qu'elle soit égale à une tension nominale pour une phase $\pi/2$, et déterminer si le rapport est égal à 1 ;

ajuster la tension appliquée sur le modulateur de phase jusqu'à ce que le rapport soit égal à 1, dans le cas où le rapport n'est pas égal à 1 ;

déterminer la tension appliquée sur le modulateur de phase comme étant la valeur d'étalonnage correspondant à la phase $\pi/2$ ;

ajuster le contrôleur de polarisation ou rajuster le déphaseur jusqu'à ce que le rapport soit maximisé ; et

ajuster la tension appliquée au modulateur de phase pour qu'elle soit égale à une tension nominale pour une phase $3\pi/2$, et déterminer si le rapport est minimisé ;

ajuster la tension appliquée sur le modulateur de phase jusqu'à ce que le rapport soit minimisé, dans le cas où le rapport n'est pas minimisé ; et

déterminer la tension ajustée appliquée sur le modulateur de phase comme étant la valeur d'étalonnage correspondant à la phase $3\pi/2$.

14. Procédé selon la revendication 9, comprenant en outre : recevoir la lumière de signal par l'interféromètre à bras égaux, dans lequel :

la lumière de signal et la lumière d'ajustement sont multiplexées par répartition dans le temps sur un signal lumineux ;

la lumière de signal et la lumière d'ajustement sont introduites dans une même direction dans l'interféromètre à bras égaux ; ou

la lumière de signal et la lumière d'ajustement sont introduites dans l'interféromètre à bras égaux dans des directions opposées.

**Figure 1**

**Figure 2**

**Figure 3**

**Figure 4**

14

| Signal light | | 15 | PM | 16 | 17 | Signal light |

Phase feedback module

Phase-shifter driving module 1312

Phase-feedback algorithm module 1311

Photoelectric detection module 1211

**Figure 5**

An equal-arm Mach-Zehnder interferometer receives feedback light — S101

The equal-arm Mach-Zehnder interferometer transmits the feedback light to a photoelectric detection module — S102

The photoelectric detection module receives the feedback light to obtain a photoelectric detection signal — S103

A phase feedback module receives the photoelectric detection signal, determines whether the photoelectric detection signal is an interference signal reflecting a zero phase difference between two arms of the equal-arm Mach-Zehnder interferometer, performs data processing to obtain a phase adjustment signal, and apply the phase adjustment signal on the phase shifter — S104

**Figure 6**

Photoelectric
detection module 1                    PBS

Polarization
controller

Photo-detector

**Figure 7**

Photoelectric
detection module 2            PBS            First
                                             photo-detector

Polarization
controller

Second
photo-detector

**Figure 8**

Figure 9

Figure 10

Photoelectric
detection module 3

Photo-detector

**Figure 11**

Photoelectric
detection module 4

Second
photo-detector

First
photo-detector

**Figure 12**

Signal light

Signal light | BS | PM | PBS | BS

PS

Phase
feedback
module | Phase-shifter
driving
module | Phase-feedback
algorithm
module | Photoelectric
detection
module

**Figure 13**

**Figure 14**

**Figure 15**

**Figure 16**

| | |
|---|---|
| An equal-arm Mach-Zehnder interferometer receives calibration light | S201 |

| | |
|---|---|
| The equal-arm Mach-Zehnder interferometer transmits the calibration light to a photoelectric detection module | S202 |

| | |
|---|---|
| The photoelectric detection module obtains a detection result based on the calibration light | S203 |

| | |
|---|---|
| A phase calibration module receives the detection result of the photoelectric detection module, performs data processing on the detection result to obtain a calibration value of a phase modulation voltage, and tunes a nominal modulation voltage of the phase modulator in a first arm of the equal-arm Mach-Zehnder interferometer, to obtain a calibrated phase modulation voltage | S204 |

**Figure 17**

**REFERENCES CITED IN THE DESCRIPTION**

**Patent documents cited in the description**

- CN 201811209350
- WO 2018042203 A1
- CN 108494494 A